(19) **Europäisches Patentamt**
**European Patent Office**
**Office européen des brevets**

(11) **EP 2 572 831 B1**

(12) **EUROPEAN PATENT SPECIFICATION**

(45) Date of publication and mention
of the grant of the patent:
**30.05.2018 Bulletin 2018/22**

(51) Int Cl.:
***B25B 21/00*** *(2006.01)*    ***B25B 23/147*** *(2006.01)*
***B23P 19/06*** *(2006.01)*

(21) Application number: **12184914.5**

(22) Date of filing: **18.09.2012**

(54) **Electric power tool**

Elektrisches Werkzeug

Outil électrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2011 JP 2011204720**

(43) Date of publication of application:
**27.03.2013 Bulletin 2013/13**

(73) Proprietor: **Makita Corporation
Anjo, Aichi 446-8502 (JP)**

(72) Inventors:
• **Kusakawa, Takuya
Anjo,, Aichi 446-8502 (JP)**

• **Hirabayashi, Tokuo
Anjo,, Aichi 446-8502 (JP)**
• **Kobayashi, Kenji
Anjo,, Aichi 446-8502 (JP)**

(74) Representative: **Kramer Barske Schmidtchen
Patentanwälte PartG mbB
European Patent Attorneys
Landsberger Strasse 300
80687 München (DE)**

(56) References cited:
**EP-A1- 1 510 294      WO-A2-2008/128523
DE-A1-102006 046 388   US-A- 5 245 747**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

The present invention relates to an electric power tool rotationally driven by a motor.

There have been known a so-called electronic clutch type electric power tool configured so that a motor driving is stopped when a rotational torque of an output shaft, on which a tool element such as a driver bit is mounted, exceeds a predetermined set torque.

Generally, according to this type of electric power tool, a current threshold, which is an upper limit of a motor current, is set corresponding to a set torque set by a user, and the motor driving is discontinued when a motor current exceeds the current threshold.

In a case where the electric power tool is a screw fastening machine for example, when an output shaft of the electric power tool (in other words, a screw) is rotated by driving a motor and the screw sits on an object to be fastened, a rotational torque of the output shaft of the electric power tool (in other words, a screw tightening torque) increases.

For an electric power tool provided with a mechanical type clutch, when the rotational torque increases as described above and reaches the set torque, the connection between a rotational shaft of the motor and the output shaft of the electric power tool is interrupted, so that it is possible to limit the rotational torque of the output shaft of the electric power tool to the set torque.

However, for an electronic clutch type electric power tool, the connection between the rotational shaft of the motor and the output shaft of the electric power tool is not interrupted.

Therefore, according to an electronic-clutch type screw fastening machine, even when a screw sits on an object to be fastened, the rotational torque of the output shaft of the electric power tool increases and reaches the set torque, and the motor driving is stopped, the rotational torque of the output shaft of the electric power tool further increases by a rotational energy of the motor. As a result, over-torque may occur, where the rotational torque of the output shaft of the electric power tool exceeds the set torque.

In order to inhibit such occurrence of over-torque, in JP10193230A, it is suggested to control a motor driving voltage corresponding to a fastening demand curve that shows a relationship between a rotational speed, and a rotational torque, of an output shaft when fastening a screw.

According to this suggested screw fastening machine, when a motor driving voltage is controlled to be constant, a relationship between a rotational speed, and a rotational torque, of the motor exhibits a proportional characteristic curve with the rotational torque increasing corresponding to decrease in the rotational speed. Here, two characteristic lines are set: one is a motor maximum capacity characteristic line and the other one is a load requirement maximum capacity characteristic line.

The motor maximum capacity characteristic line is a characteristic line obtained by controlling a motor driving voltage at the maximum value. The load requirement maximum capacity characteristic line exhibits the proportional characteristic curve required to fasten a screw.

Further, according to the above described screw fastening machine, in order to reduce a rotational energy of the motor after stopping the motor driving, a drooping characteristic is set, which shifts from the motor maximum capacity characteristic line to the load requirement maximum capacity characteristic line corresponding to the fastening demand curve.

A motor driving voltage is switched in accordance with the set drooping characteristic at any arbitrary rotational torque given by the time when the rotational torque of the output shaft of the electric power tool reaches the set torque since the initiation of screw fastening. Accordingly, the motor rotational energy is reduced and the occurrence of over-torque is inhibited.

WO 2008/128523 A2 relates to a power screwdriver, comprising a motor, a desired torque default element and an actual torque determination element, a torque gradient determination element and a motor control which controls the motor depending on the torque gradient.

DE 10 2006 046 388 A1 discloses a motor control device including a motor, a power converter for driving the motor, and a current controller.

US 5,245,747 concerns a device for tightening threaded joints in two subsequent steps. During a second tightening step, an angle speed of the power tool is gradually increased at a predetermined rate.

EP 1 510 294 A1 discloses a power impact tool for fastening a screw or a bolt in which a malfunction that driving of a motor is stopped before the screw or the bolt is fastened completely can be prevented. A fastening judger judges that the fastening operation is completed at least when a torque variation ratio becomes substantially zero and a reference index becomes equal to or larger than a threshold value of trouble judgement.

SUMMARY

According to the above suggested technique, the occurrence of over-torque is inhibited by switching a motor driving voltage corresponding to the fastening demand curve of the screw fastening machine. Therefore, it is possible to reduce the duration of time where the screw tightening torque exceeds the set torque, but not possible to control the screw tightening torque at or below the set torque.

That is, the fastening demand curve and each of the above maximum capacity characteristic lines of the screw fastening machine can be obtained by experiments, simulations, or the like, but the characteristics of each curve or line are influenced by experiment conditions, parameters set for simulating, or the like.

Therefore, when a drive system of an electric power tool is structured by a designing technique disclosed in JP10193230A, it is possible to inhibit a rotational torque of an output shaft of an electric power tool from significantly exceeding a set torque, but not possible to inhibit the occurrence of over-torque.

A first aspect of the present invention, is disclosed in independent claim 1.

Therefore, according to the electric power tool of the first aspect, it is possible to limit the rotational speed of the motor at or smaller than the optimum maximum rotational speed at which a rotational torque of the output shaft of the electric power tool does not exceed the set torque. Further, it is possible to restrain the rotational torque (in other words, tightening torque) of the output shaft of the electric power tool from exceeding the set torque when fastening the object.

Explained below is the optimum maximum rotational speed that is a basis of the control parameter set by the control parameter setting unit.

In the electric power tool, when the motor rotates, the motor is considered to have a rotational energy. Accordingly, when fastening an object by a tool element mounted on the output shaft of the electric power tool, the rotational energy contributes as a tightening torque of the object.

When a rotational speed of the motor is $\omega$, and an inertia moment is J, the rotational energy of the motor is expressed as $(1/2) \cdot J \cdot \omega^2$. In this case, at a time of fastening an object, a relationship between the rotational speed $\omega$ of the motor and the tightening torque (rotational torque of the output shaft of the electric power tool) is described as shown in the formula (3) below.

$$\omega = T / \{(K \cdot J)^{1/2}\} \cdot G \qquad (3)$$

wherein: K is a joint coefficient, and G is a gear ratio of a transmission provided between the motor and the output shaft of the electric power tool.

The joint coefficient K is described as shown in the formula (4) below with the tightening angle $\theta$ of the object.

$$T/G = K \cdot \theta \cdot G$$

$$\therefore \ K = T / (\theta \cdot G^2) \qquad (4)$$

Therefore, the relationship between the object tightening torque T and the motor rotational speed $\omega$ is described as shown in the formula (5), and the object tightening torque T is described as shown in the formula (6).

$$\omega = T / \{(K \cdot J)^{1/2}\} \cdot G$$

$$= T / [\{(T / (\theta \cdot G^2)) \cdot J\}^{1/2}] \cdot G$$

$$= T / \{(T / \theta) \cdot J\}^{1/2}$$

$$\omega^2 = T \cdot \theta / J \qquad (5)$$

$$T = (J / \theta) \cdot \omega^2 \qquad (6)$$

The inertia moment J is determined by the characteristics of the motor. The tightening angle $\theta$ is a rotational angle of the output shaft that is suitable to fasten a screw sitting on an object and is determined based upon the type of object and the conditions for use of the electric power tool. Therefore, the above formula (6) may be re-described as a coefficient $\alpha$ as substitute for $J/\theta$ as shown in the formula (7).

$$T = \alpha \cdot \omega^2 \qquad (7)$$

As is obvious from the formulas (6) and (7), the tightening torque T of the object (that is, rotational torque of the output shaft of the electric power tool) is determined by the rotational speed $\omega$ of the motor.

Therefore, in order to control the tightening torque not to exceed the set torque, it is preferable to control the rotational speed of the motor at or smaller than a rotational speed satisfying the formula (6) or (7).

Further, the tightening torque T of an object in the above formula may be described as shown in the formula (8). Therefore, it is preferable to control the rotational speed of the motor at or smaller than a rotational speed satisfying the formula (8).

$$T = \omega \cdot G \cdot (K \cdot J)^{1/2} \qquad (8)$$

Therefore, according to the present invention, a rotational speed of the motor that rotates with a rotational energy required to rotate the output shaft of the electric power tool at the set torque is obtained as an optimum maximum rotational speed. The optimum maximum rotational speed or a control amount corresponding thereto is set as a control parameter for limiting a rotational speed of the motor.

The optimum maximum rotational speed (or the control amount corresponding thereto) may be calculated in advance based upon the above described relational expression between rotational torque T and the rotational speed $\omega$ and be stored as one of control data. The control parameter setting unit may set the optimum maximum rotational speed (or the control amount corresponding thereto) by reading out the control data.

Further, the control parameter setting unit may calculate the optimum maximum rotational speed (or the control amount corresponding thereto) based upon the above described relational expression between rotational torque T and the rotational speed ω every time when the operation unit is operated and the control unit initiates controlling of the motor driving.

In a case where the control parameter setting unit calculates the optimum maximum rotational speed (or the control amount corresponding thereto) in this way, it is preferable to configure the control parameter setting unit as described below.

That is, in the electric power tool, the control parameter setting unit may be configured to calculate a rotational speed ω so as to satisfy the following formula (1) corresponding to the above formula (7) and to set the control parameter by use of this rotational speed ω that is the optimum maximum rotational speed.

$$ T \geq \alpha \cdot \omega^2 \qquad (1) $$

Further, in the electric power tool, the control parameter setting unit may be configured so as to calculate a rotational speed ω so as to satisfy the following formula (2) corresponding to the above formula (6) and to set the control parameter by use of this rotational speed ω that is the optimum maximum rotational speed.

$$ T \geq (J/\theta) \cdot \omega^2 \qquad (2) $$

When the control parameter setting unit is configured as described above, it is possible to calculate relatively easily the optimum maximum rotational speed, which is an upper limit of the rotational speed of the motor at a time of driving the motor, by use of the formula (1) or (2), thereby enabling to reduce a time required to set the control parameter.

Especially, according to the electric power tool having the control parameter setting unit using the formula (2), an optimum maximum rotational speed is calculated in accordance with the tightening angle θ. Therefore, it is possible to calculate an optimum maximum rotational speed corresponding to the tightening angle θ designated by a user in accordance with the type of screw or object.

Further, the electric power tool may be provided with a torque setting unit that selects, in response to an external operation, the set torque from among a plurality of torques predetermined. The control parameter setting unit may set, as the control parameter, an optimum maximum rotational speed corresponding to at least one of the plurality of torques selectable by the torque setting unit or a control amount corresponding to the optimum maximum rotational speed.

Accordingly, according to the electric power tool configured described above, if the control parameter setting unit is configured so as to set an optimum maximum rotational speed (or control amount corresponding thereto) every set torque set by the torque setting unit, it is possible to control the motor rotation so that a tightening torque does not exceed the set torque when fastening the object at each set torque.

In a case where an object tightening torque is one (or a part) of the plurality of set torques settable by the torque setting unit, if the control parameter setting unit is configured so as to set an optimum maximum rotational speed (or control amount corresponding thereto) corresponding to the one (or the part) of the set torques, it is possible to control the motor rotation so that a tightening torque does not exceed the set torque.

Further, the electric power tool may further include a motor current detecting unit that detects a motor current and a motor current threshold setting unit that sets a current threshold corresponding to the set torque. The control unit may stop driving of the motor when the motor current detected by the motor current detecting unit reaches the current threshold set by the current threshold setting unit at a time of driving the motor.

Therefore, according to the electric power tool configured as described above, it is possible to achieve a function as an electronic clutch using motor current while limiting torque of the output shaft by use of the optimum maximum rotational speed of the present invention. Therefore, it is possible to inhibit more effectively a rotational torque of the output shaft of the electric power tool from exceeding the set torque.

BRIEF DESCRIPTION OF THE DRAWINGS

The present invention will be described by way of example with reference to the accompanying drawings, in which:

FIG. 1 is a block diagram showing a configuration of an entire drive system of an electric power tool of an embodiment;
FIG. 2 is a flowchart illustrating a series of control processes executed by a controller;
FIG. 3 is a flowchart illustrating a motor rotational speed setting process executed at S150 of FIG. 2;
FIG. 4 is an explanatory view illustrating a rotational speed setting map used at the motor rotational speed setting process of FIG. 3;
FIGS. 5A and 5B are explanatory views illustrating a method of creating the rotational speed setting map of FIG. 4;
FIG. 6 is an explanatory view illustrating a duty setting map used instead of the rotational speed setting map of FIGS. 5A and 5B;
FIG. 7 is an explanatory view illustrating a rotational speed setting map used to set an optimum maximum rotational speed per tightening angle; and
FIG. 8 is a flowchart illustrating a modified example of the motor rotational speed setting process.

DETAILED DESCRIPTION OF THE PREFERRED EMBODIMENTS

An electric power tool of the present embodiment performs a predetermined processing (for example, fastening of screws to an object to be fastened) on an object through a tool bit as a tool element (driver bit, for example) by rotating an output shaft on which the tool bit is mounted.

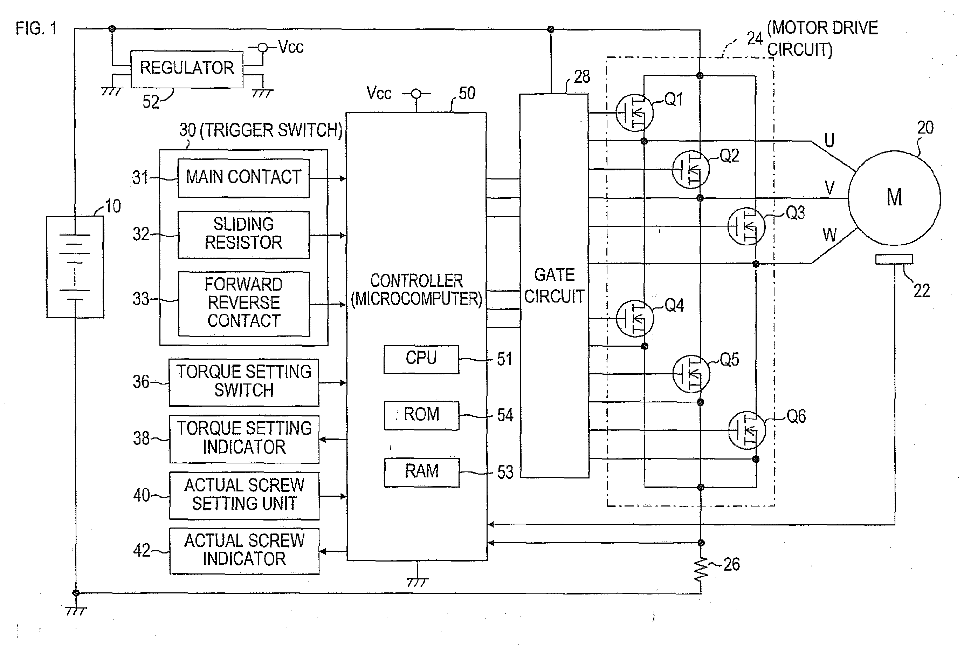

FIG. 1 shows a configuration of an entire drive system which is stored or installed in a housing body (not shown) of the electric power tool to be used for rotationally driving the output shaft.

As shown in FIG. 1, the electric power tool includes a three-phase brushless DC motor as a motor 20 which rotates the output shaft. A transmission (not illustrated) is mounted on a rotational shaft of this motor 20, and the output shaft of the electric power tool is rotationally driven by the motor 20 via this transmission.

The electric power tool also includes a battery pack 10, a motor drive circuit 24, a gate circuit 28, and a controller 50 as drive units that drive control the motor 20.

The battery pack 10 is structured by storing a plurality of secondary battery cells connected in series in a casing which can be detachably mounted on the housing body of the electric power tool.

The motor drive circuit 24 receives power supply from the battery pack 10 to pass electric current to each phase winding of the motor 20. The motor drive circuit 24 includes six switching elements Q1 to Q6 constituted respectively of FETs.

In the motor drive circuit 24, the switching elements Q1 to Q3 are provided as so-called high-side switches between each terminal U, V, W of the motor 20 and a power supply line connected to a positive electrode side of the battery pack 10.

The switching elements Q4 to Q6 are provided as so-called low-side switches between the each terminal U, V, W of the motor 20 and a ground line connected to a negative electrode side of the battery pack 10.

The gate circuit 28, in accordance with a control signal outputted from the controller 50, turns on/off the switching elements Q1 to Q6 of the motor drive circuit 24 to pass an electric current through each phase winding of the motor 20, thereby rotating the motor 20.

The controller 50 is constituted of a one-chip microcomputer including a CPU 51, a ROM 54, a RAM 53, an I/O port, an A/D converter, a timer, and so on.

The controller 50, in accordance with a drive command from the trigger switch 30, sets a drive duty ratio of the switching elements Q1 to Q6 which constitute the motor drive circuit 24. The controller 50 then outputs, to the gate circuit 28, a control signal in accordance with the drive duty ratio, thereby rotationally driving the motor 20.

The trigger switch 30 is provided for a user to enter a drive command for driving the electric power tool by manual operation. The trigger switch 30 is provided in the housing body of the electric power tool together with a torque setting switch 36, a torque setting indicator 38, an actual screw setting unit 40, and an actual screw indicator 42.

The trigger switch 30 includes a main contact 31, a sliding resistor 32 and a forward reverse contact 33. The main contact 31 is turned on upon operation by a user. A resistance value of the sliding resistor 32 varies depending on a pulling amount (i.e., amount of operation) of the trigger switch 30 by the user. The forward reverse contact 33 is provided for accepting a command for switching a rotation direction from the user.

The torque setting switch 36 is provided for the user to set by manual operation an upper limit of a rotational torque of the output shaft (for example, tightening torque by the tool bit).

According to the embodiment, a set torque is increased by a predetermined amount through one operation of the torque setting switch 36. If the torque setting switch 36 is operated when the set torque is at the maximum value, the set torque returns to the minimum value and increases in a stepwise fashion again upon the subsequent operations.

The actual screw setting unit 40 is provided to set a type of screw to be actually used, whether the actually used screw is a wood screw, a bolt for a metal, or the like. According to the embodiment, three types of screws may be selectively used, each of which has a different tightening angle after sitting on the subject object.

That is, according to the embodiment, the three types of screws to be actually used are defined as follows. The screw having the smallest tightening angle (e.g., 30 degrees, a bolt for a metal) is defined as "hard joint", the one having the largest tightening angle (e.g., 720 degrees, a wood screw or a bolt for a metal) is defined as "soft joint", and the one having a tightening angle between the smallest tightening angle and the largest tightening angle (e.g., 180 degrees) is defined as "others". A type of screw to be actually used can be designated from among these three types of screws.

The torque setting switch 36 and the actual screw setting unit 40 are connected to the controller 50. The controller 50 recognizes the set torque and the type of screw based upon the operating states thereof and indicates the same on the torque setting indicator 38 and the actual screw indicator 42.

A rotational position sensor 22 is provided for the motor 20 to detect a rotational speed and a rotational position of the motor 20. In a conductive path from the battery pack 10 to the motor 20 via the motor drive circuit 24, a resistance 26 is provided for detecting a motor current fed to the motor 20.

A detection signal from the rotational position sensor 22 and a detection signal of the motor current by the resistance 26 are respectively inputted to the controller 50.

In addition, because the controller 50 is constituted of a microcomputer, it is necessary to supply a constant power supply voltage Vcc. For this reason, a regulator 52 is also provided inside the housing body of the electric power tool. The regulator 52 receives power supply from the battery pack 10 to generate the constant power supply voltage Vcc (for example, DC 5V) which is supplied to the controller 50.

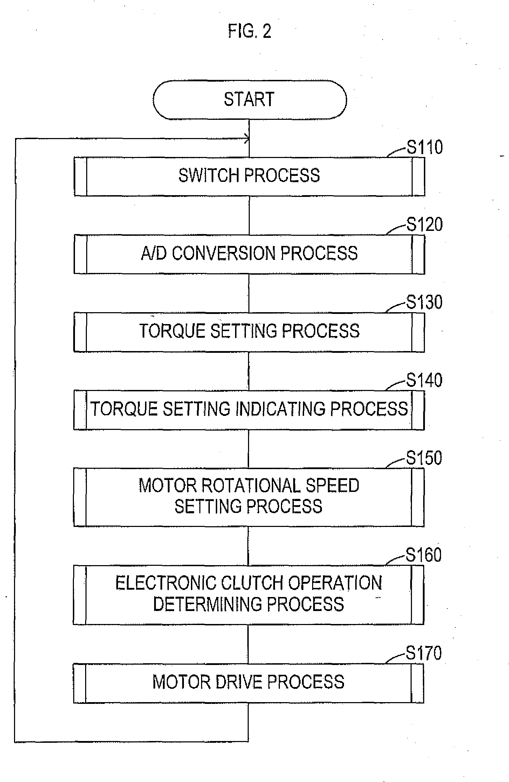

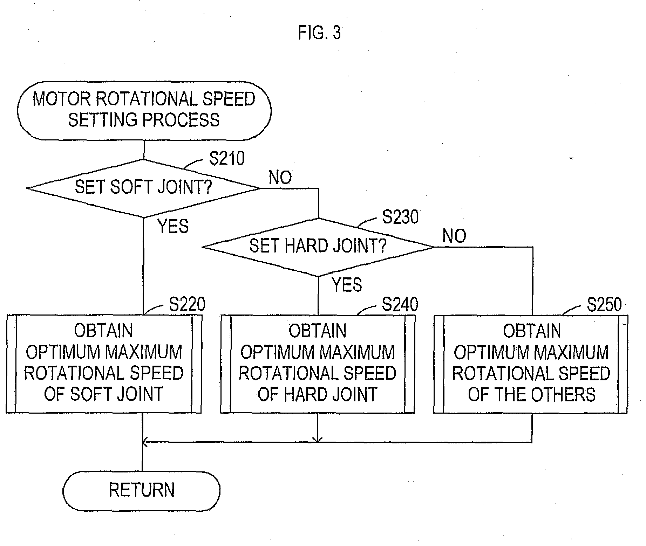

Next, a control process will be described along the flowcharts shown in FIGS. 2 and 3, which is performed by the controller 50 (CPU, in detail) in order to rotationally drive the motor 20 in accordance with a drive command from the trigger switch 30.

The control process is a process repeatedly executed by the controller 50, when the power supply voltage Vcc is applied to the controller 50 from the regulator 52.

As shown in FIG. 2, the controller 50, when the control process is started, performs a switch process in S110 (S represents a step), in which the operational states of the torque setting switch 36 of the actual screw indicator 40 are identified.

Then, in S120, an A/D conversion process is performed in which a resistance value of the sliding resistor 32 of the trigger switch 30 and a voltage between both ends of the resistance 26 for detecting the motor current are retrieved via an A/D converter and the pulling amount of the trigger switch 30 and the motor current are detected.

In S130, the controller 50 identifies the screw tightening torque and the type of screw (hard joint, soft joint, and the others), based upon the operational states of the torque setting switch 36 and the actual screw setting unit 40 identified in S110.

In S140 that follows S130, the controller 50 indicates, at the toque setting indicator 38 and the actual screw indicator 42, the tightening torque and the type of the screw identified in S130. At S150, the controller 50 sets an optimum maximum rotational speed of the motor 20 based upon the identified tightening torque.

The optimum maximum rotational speed set at S150 is a rotational speed to generate, at the motor 20, a rotational energy required to rotate the output shaft of the electric power tool at the tightening torque set via the torque setting switch 36. The steps to set the optimum maximum rotational speed are described later.

Next, at S160, the controller 50 determines whether the motor current detected at S120 is greater than a current threshold corresponding to the tightening torque identified at S130 whereby the controller 50 determines whether or not to stop driving of the motor 20 (in other words, whether or not to activate a function as an electronic clutch).

At S170 that follows S160, the controller 50 performs a motor drive process for driving the motor 20 based upon the pulling amount of the trigger switch 30 detected at S120, the rotational speed of the motor 20 obtained by the detection signal from the rotational position sensor 22, the optimum maximum rotational speed of the motor 20 set at S150, a determination result of an electronic clutch operation at S160, and the like. The control process then goes back to S110.

This motor drive process is a process to control the rotational speed of the motor 20 to a rotational speed corresponding to the pulling amount of the trigger switch 30 under the condition that the rotational speed of the motor 20 does not exceed the optimum maximum rotational speed being an upper limit. The motor drive process further serves to stop driving of the motor 20 when the controller 50 determines the activation of the electronic clutch operation.

Specifically, the controller 50 sets a target duty ratio depending on the pulling amount of the trigger switch 30 and increases the drive duty ratio of the switching elements Q1 to Q6 by the gate circuit 28 to the target duty ratio whereby the rotational speed of the motor 20 increases up to a rotational speed corresponding to the pulling amount of the trigger switch 30.

Further, if the rotational speed of the motor 20 increases up to around the optimum maximum rotational speed, the controller 50 increases or decreases the drive duty ratio such that the rotational speed of the motor 20 does not exceed the optimum maximum rotational speed. The controller 50 then performs feedback control of the rotational speed of the motor 20.

By driving the motor 20 as described above, if the motor current exceeds the current threshold and the activation of the electronic clutch operation is determined at S160, the controller 50 stops driving the motor 20.

Therefore, according to the electric power tool of the embodiment, the motor 20 is rotationally driven with reference to the optimum maximum rotational speed set by a motor rotational speed setting process at S150 as an upper limit.

Next described below is the motor rotational speed setting process for setting this optimum maximum rotational speed, with reference to the flowchart in FIG. 3.

As illustrated in FIG. 3, in the motor rotational speed setting process, first at S210, the controller 50 determines whether the type of the screw currently set is "soft joint".

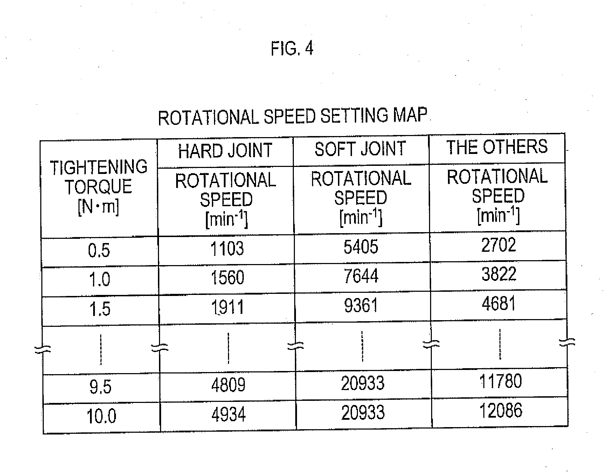

When the type of the screw is "soft joint", the process moves to S220, wherein the controller 50 obtains, from a rotational speed setting map shown in FIG. 4, an optimum maximum rotational speed corresponding to a tightening torque currently set and to "soft joint". The controller 50 then terminates the motor rotational speed setting process.

When the controller 50 determines at S210 that the type of the screw currently set is not "soft joint", the process moves to S230, wherein the controller 50 determines whether the type of the screw currently set is "hard joint".

When the type of the screw is "hard joint", the process moves to S240, wherein the controller 50 obtains, from the rotational speed setting map shown in FIG. 4, an optimum maximum rotational speed corresponding to a tightening torque currently set and to "hard joint". The controller 50 then terminates the motor rotational speed setting process.

When the controller 50 determines at S230 that the type of the screw currently set is not "hard joint", the process moves to S250, wherein the controller 50 obtains, from the rotational speed setting map shown in FIG. 4, an optimum maximum rotational speed corresponding to a tightening torque currently set and to "the others". The controller 50 then terminates the motor rotational speed setting process.

As described above, in the motor rotational speed setting process, the controller 50 sets an optimum maximum rotational speed of the motor 20 with use of the rotational speed setting map pre-stored in the controller 50 and based upon the tightening torque currently set and the type of the screw (in other words, tightening angle).

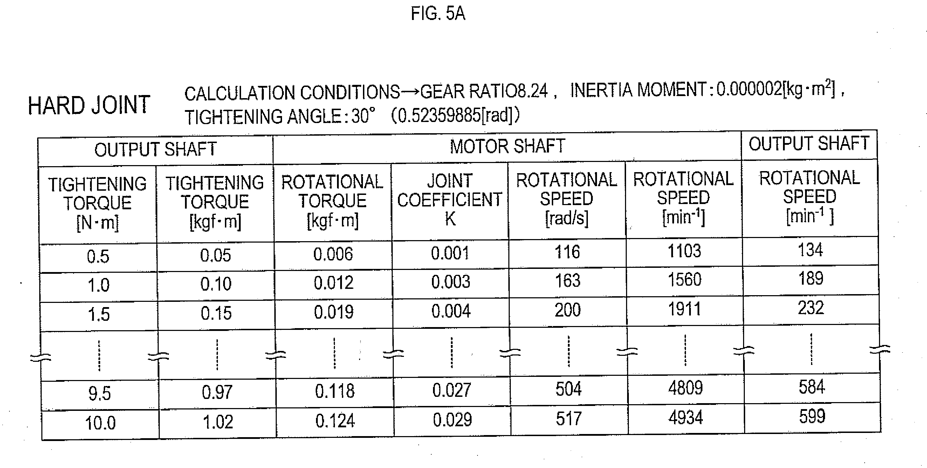

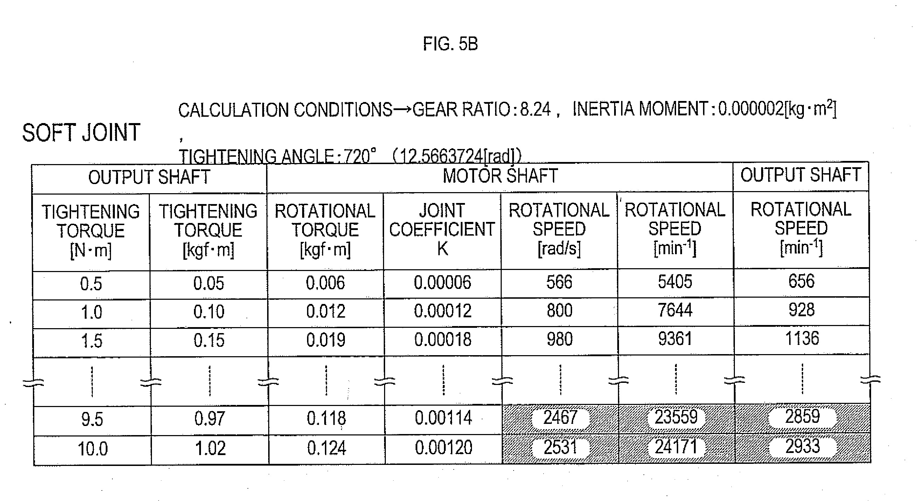

Next described below is a procedure to set the optimum maximum rotational speeds registered in this rotational speed setting map, with reference to FIGS. 5A and 5B.

As described above, in the electric power tool, a rotational energy of the motor 20 is needed to rotate the output shaft at a desired rotational torque (tightening torque) T. A rotational speed $\omega$ of the motor 20 to generate such a rotational energy is described as shown in the formula (9) below.

$$\omega = T / \{ (K \cdot J)^{1/2} \} \cdot G \qquad (9)$$

As described above, the joint coefficient K is described as shown in the formula (10) below.

$$K = T / (\theta \cdot G^2) \qquad (10)$$

Therefore, the rotational speed $\omega$ of the motor 20 is calculated when a gear ratio G of a transmission between the motor 20 and the output shaft, an inertia moment J of the motor 20, and a tightening angle $\theta$ are obtained. The rotational speed $\omega$ of the motor 20 is needed to generate, at the output shaft, a tightening torque set via the torque setting switch 36. According to the embodiment, the tightening torques are set at 0.5, 1.0, 1.5, ..., 9.5, and 10.0 [N·m].

Here, as illustrated in FIGS. 5A and 5B, the rotational speeds $\omega$ are calculated corresponding to the tightening torques respectively, based upon a calculation condition that includes the gear ratio G determined based upon characteristics of the transmission and the inertia moment J determined based upon characteristics of the motor 20, and the tightening angle $\theta$ for each type of the screw. Each calculation result is employed in the rotational speed setting map.

FIG. 5A shows a procedure to calculate an optimum maximum rotational speed when the screw type is "hard joint", and FIG. 5B shows the one when the screw type is "soft joint".

That is, first of all, the unit of the tightening torque of the output shaft is converted from [N·m] to [kgf·m]. The tightening torque [kgf·m] of the output shaft is divided by the gear ratio G, whereby the rotational torque [kgf·m] of the motor 20 is obtained. The joint coefficient K is obtained by the above formula (10) using the rotational torque [kgf·m] of the motor 20, the tightening angle $\theta$, and the gear ratio G.

Then, the rotational speed [rad/s] of the motor 20 is obtained by the formula (9) using the joint coefficient K, the inertia moment J, the rotational torque [kgf·m] of the motor 20, and the gear ratio G. The rotational speed [rad/s] of the motor 20 is converted to revolutions [min-1] per minute and set as an optimum maximum rotational speed [min-1].

In FIGS. 5A and 5B, the rotational speed of the output shaft is obtained by dividing the optimum maximum rotational speed [min-1] of the motor 20 by the gear ratio G of the transmission.

In FIG. 5B where the screw type is "soft joint", the rotational speeds for large tightening torques are hatched. This hatching denotes that the rotational speeds exceed the maximum rotational speed tolerable by the electric power tool of the embodiment.

Regarding these rotational speeds to be computationally greater than the maximum rotational speed, the maximum rotational speed (20933 in the figure) is registered in the rotational speed setting map, as illustrated in FIG. 4.

FIGS. 5A and 5B do not describe the case where the type of the screw is "the others", but the optimum maximum rotational speed of "the others" is calculated assuming that a tightening angle $\theta$ is an angle value between the one for "hard joint" and the one for "soft joint" (for example, 180 degrees).

As described above, according to the electric power tool of the embodiment, a tightening torque is able to be set via the torque setting switch 36. Also, the type of the screw (hard joint, soft joint, and the others) is able to be set via the actual screw setting unit 40.

In response to the operation of the trigger switch 30 in a state where these parameters have been set, the optimum maximum rotational speed of the motor 20 is set based upon the parameters, and the rotational speed of the motor 20 is controlled so as not to exceed the optimum maximum rotational speed.

Therefore, according to the electric power tool of the embodiment, when fastening a screw, it is possible to inhibit a rotational torque of the output shaft (i.e., a screw tightening torque) from exceeding a set torque set by a user.

According to the embodiment, the trigger switch 30 corresponds to one example of an operation unit of the present invention, the controller 50 corresponds to one example of a control unit, the one of a control parameter setting unit, and the one of a current threshold setting unit of the present invention.

The function as the control unit of the present invention is achieved, for example, by the motor drive process performed by the controller 50, and the function as the control parameter setting unit is achieved, for example, by the motor rotational speed setting process performed by the controller 50, and the function as the current threshold setting unit is achieved, for example, by a clutch operation determining process performed by the controller 50.

The present invention should not be construed as limited to the embodiment set forth above and can be achieved in any modes within the scope of the present invention.

For example, according to the above embodiment, an optimum maximum rotational speed is set as a control parameter for controlling the rotational speed of the motor 20, by use of the rotational speed setting map in FIG. 4. This is in order to perform feedback control of the rotational speed of the motor 20 in the motor drive process at S170.

If the feedback control of the rotational speed is not performed in the motor drive process (i.e., when a so-called open control is performed), it is not essential to set an optimum maximum rotational speed. For example, a control amount of the motor 20 corresponding to the optimum maximum rotational speed may be set.

Specifically, the rotational speed of the motor 20 changes depending on the drive duty ratio of the switching elements Q1 to Q6. Therefore, even if the upper limit of the drive duty ratio is set corresponding to the optimum maximum rotational speed, the same effects as the above described embodiment can be obtained.

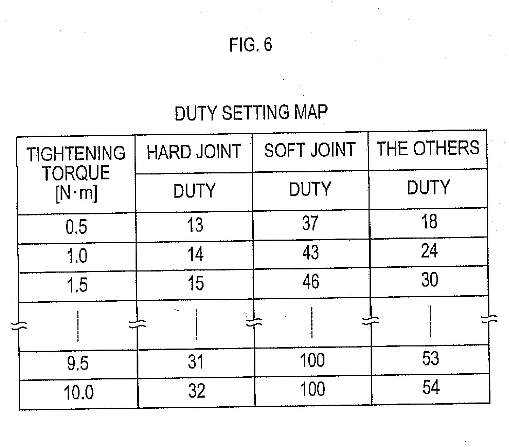

In this case, as illustrated in FIG. 6, it is preferable that a DUTY setting map is created in advance, which describes drive duty ratios DUTY corresponding to optimum maximum rotational speeds, and the DUTY setting map is stored in a memory. A DUTY setting process to obtain a drive duty ratio DUTY from the DUTY setting map may be performed instead of the motor rotational speed setting process in S150.

Meanwhile, according to the embodiment, when a user selects one from among "soft joint", "hard joint" and "the others" as a type of the screw (in other words, a tightening method), an optimum maximum rotational speed suitable for the tightening method selected is set.

However, since the optimum maximum rotational speed varies depending on the screw tightening angle, it is preferable that a user can set a desired tightening angle and an optimum maximum rotational speed (or, a drive duty ratio being a control amount corresponding thereto) can be set corresponding to the tightening angle set by the user.

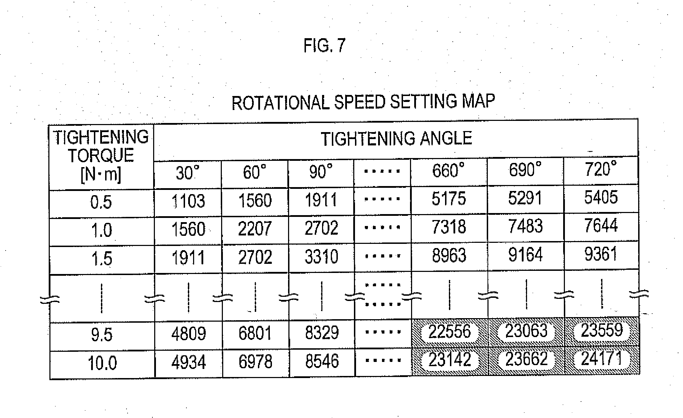

In this case, a tightening angle setting unit is provided, instead of the actual screw setting unit 40, for a user to designate a screw tightening angle. As illustrated in FIG. 7, a rotational speed setting map is created and stored in a memory, which describes an optimum maximum rotational speed corresponding to the tightening torque, every tightening angle settable by the user.

Accordingly, in the motor rotational speed setting process at S150, an optimum maximum rotational speed can be set based upon the tightening angle set by the tightening angle setting unit and the tightening torque, thereby enabling to set a more appropriate optimum maximum rotational speed in response to conditions for use of the electric power tool.

The tightening angle setting unit may be configured so that a tightening angle increases by a predetermined amount every switch operation or configured so that a numerical value of a tightening angle is entered.

Further, according to the above described embodiment, regarding the rotational speed setting map, the optimum maximum rotational speed is set in a unit of 0.5 [N·m] at the tightening torque ranging from 0.5 [N·m] to 10.0 [N·m]. However, it is preferable that this tightening torque is set arbitrarily in accordance with the specification of the electric power tool.

For example, if the tightening torques settable by an external operation are 1.5 [N·m], 3.0 [N·m], 5.2 [N·m], and 12.5 [N·m], it is preferable to prepare a map to set an optimum maximum rotational speed (alternatively, control amount corresponding thereto) every tightening torque described above.

On the other hand, according to the above described embodiment, the optimum maximum rotational speed (or a drive duty ratio DUTY being a control amount corresponding thereto) is set by use of the rotational speed setting map (or a DUTY setting map). However, the optimum maximum rotational speed (or a drive duty ratio DUTY being a control amount corresponding thereto) can be calculated in the motor rotational speed setting process at S150.

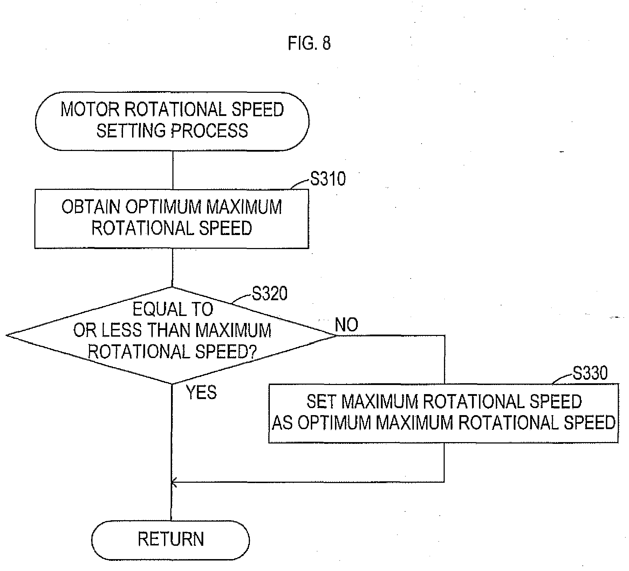

In other words, as illustrated in FIG. 8, in the motor rotational speed setting process, fist at S310, an optimum maximum rotational speed corresponding to a tightening torque (or a tightening torque and a tightening angle) is calculated with reference to the above described formula (1) (or formula (2)).

Next, at S320, the controller 50 determines whether the optimum maximum rotational speed calculated is equal to or smaller than the maximum rotational speed of the motor 20. when the optimum maximum rotational speed calculated is equal to or smaller than the maximum rotational speed of the motor 20, the motor rotational speed setting process is terminated.

When the optimum maximum rotational speed is greater than the maximum rotational speed of the motor 20, the process moves to S330, at which the maximum rotational speed is set as the optimum maximum rotational speed, and the motor rotational speed setting process is terminated.

If the motor rotational speed setting process is performed in this way, an optimum maximum rotational speed can be set without the rotational speed setting map.

When an upper limit of the drive duty ratio DUTY is set as described in the DUTY setting map in FIG. 6, a process may be performed, by which the optimum maximum rotational speed obtained in the above described procedure is converted to a drive duty ratio DUTY.

Further, according to the above described embodiment, the controller 50 is constituted of a microcomputer. However, the controller 50 may be constituted of a programmable logic device, such as an ASIC (Application Specific Integrated Circuits), an FPGA (Field Programmable Gate Array), and so on for example.

The above described control processes performed by the controller 50 is accomplished when the CPU 51 constituting the controller 50 executes programs. These programs may be written in a memory (ROM etc.) within the controller 50 or may be stored in a recording medium which can read out data from the controller 50.

As a recording medium, a portable semiconductor memory (for example, a USB memory, a memory card (registered trademark), etc.) can be used.

In addition, in the above embodiment, the motor 20 is constituted as a three-phase brushless DC motor. The motor 20 can be any motor as long as the motor can rotationally drive the output shaft on which a tool element is mounted.

**Claims**

1. An electric power tool comprising:

   a motor (20) configured to rotationally drive an output shaft on which a tool can be removably mounted;
   an operation unit (30) configured to be externally operated so as to enter a drive command that is used to operate the motor (20);
   a control parameter setting unit (50) that is adapted to set, as a control parameter of the motor (20), an optimum maximum rotational speed of the motor (20) corresponding to a predetermined set torque or a control amount corresponding to the optimum maximum rotational speed; and
   a control unit (50) configured to drive the motor (20) in response to an operation amount of the operation unit (30), and to control a rotational speed of the motor (20) at or smaller than the optimum maximum rotational speed based upon the control parameter set by the control parameter setting unit (50),
   wherein the control parameter setting unit (50) is adapted to determine, as the optimum maximum rotational speed, a rotational speed of the motor (20) that rotates with a rotational energy required to rotate the output shaft at the set torque, and is adapted to set the optimum maximum rotational speed as the control parameter.

2. The electric power tool according to claim 1, wherein the control parameter setting unit (50) is adapted to calculate a rotational speed ω of the motor (20) so as to satisfy the formula (1) below:

$$ T \geq \alpha \cdot \omega^2 \quad (1) $$

wherein:

   T is the set torque of the output shaft;
   ω is the rotational speed of the motor (20); and
   α is a coefficient,
   and wherein the control parameter setting unit (50) is adapted to determine the rotational speed ω as the optimum maximum rotational speed and is adapted to set the optimum maximum rotational speed as the control parameter.

3. The electric power tool according to claim 1, wherein the control parameter setting unit (50) is adapted to calculate a rotational speed ω of the motor (20) so as to satisfy the formula (2) below:

$$ T \geq (J/\theta) \cdot \omega^2 \quad (2) $$

wherein:

   T is the set torque of the output shaft;
   ω is the rotational speed of the motor (20);
   J is an inertia moment; and
   θ is a tightening angle when fastening an object at the set torque,
   and wherein the control parameter setting unit (50) is adapted to determine the rotational speed ω as the optimum maximum rotational speed is adapted to set the optimum maximum rotational speed as the control parameter.

4. The electric power tool according to any one of claims 1-3, wherein the electric power tool comprises:

   a torque setting unit (36) that is adapted to select, in response to an external operation, the set torque from among a plurality of available predetermined torques,
   wherein the control parameter setting unit (50) is adapted to set, as the control parameter, an optimum maximum rotational speed corresponding to at least one of the plurality of available predetermined torques selectable by the torque setting unit (36) or a control amount corresponding to the optimum maximum rotational speed.

5. The electric power tool according to any one of claims 1-4 further comprising:

a motor current detecting unit (26) that is adapted to detect a motor current flowing to the motor (20); and
a current threshold setting unit (50) that is adapted to set, in response to the set torque, a current threshold that is an upper limit of the motor current,
wherein the control unit (50) is adapted to stop driving of the motor (20) when the motor current detected by the motor current detecting unit (26) reaches the current threshold set by the current threshold setting unit (50) at a time of driving of the motor (20).

6. The electric power tool according to any one of claims 1-5, wherein the control parameter setting unit (50) is adapted to determine, as the optimum maximum rotational speed, a rotational speed of the motor (20) that rotates with a rotational energy required to rotate the output shaft at the set torque at a speed sufficient to prevent the rotational torque from overshooting the predetermined set torque when an interrupt condition is met, and is adapted to set the optimum maximum rotational speed as the control parameter.

**Patentansprüche**

1. Elektrisches Kraftwerkzeug mit:

einem Motor (20), der zum drehend Antreiben einer Ausgangswelle, an der ein Werkzeug abnehmbar montiert werden kann, ausgebildet ist;
einer Betätigungseinheit (30), die zur externen Betätigung zum Eingeben eines Antriebsbefehls, der zum Betreiben des Motors (20) verwendet wird, ausgebildet ist;
einer Steuerparametereinstelleinheit (50), die zum Einstellen einer optimalen maximalen Drehzahl des Motors (20), die einem vorbestimmten Einstelldrehmoment entspricht, oder einer Steuergröße, die der optimalen maximalen Drehzahl entspricht, als einen Steuerparameter des Motors (20) angepasst ist; und
einer Steuereinheit (50), die zum Antreiben des Motors (20) ansprechend auf ein Betätigungsausmaß der Betätigungseinheit (30) und zum Steuern einer Drehzahl des Motors (20) auf die optimale maximale Drehzahl oder eine kleinere Drehzahl basierend auf dem durch die Steuerparametereinstelleinheit (50) eingestellten Steuerparameter ausgebildet ist,
bei dem die Steuerparametereinstelleinheit (50) zum Bestimmen einer Drehzahl des Motors (20), der sich mit einer Drehenergie dreht, die zur Drehung der Ausgangswelle mit dem Einstelldrehmoment benötigt wird, als der optimalen maximalen Drehzahl angepasst ist und zum Einstellen der optimalen maximalen Drehzahl als den Steuerparameter angepasst ist.

2. Elektrisches Kraftwerkzeug nach Anspruch 1, bei dem die Steuerparametereinstelleinheit (50) zum Berechnen einer Drehzahl ω des Motors (20), so dass die folgende Formel (1) erfüllt ist, angepasst ist:

$$T \geq \alpha \cdot \omega^2 \qquad (1)$$

wobei:

T das Einstelldrehmoment der Ausgangswelle ist;
ω die Drehzahl des Motors (20) ist; und
α ein Koeffizient ist,
und bei dem die Steuerparametereinstelleinheit (50) zum Bestimmen der Drehzahl ω als die optimale maximale Drehzahl angepasst ist und zum Einstellen der optimalen maximalen Drehzahl als den Steuerparameter angepasst ist.

3. Elektrisches Kraftwerkzeug nach Anspruch 1, bei dem die Steuerparametereinstelleinheit (50) zum Berechnen einer Drehzahl ω des Motors (20), so dass die folgende Formel (2) erfüllt ist, angepasst ist:

$$T \geq (J/\theta) \cdot \omega^2 \qquad (2)$$

wobei:

T das Einstelldrehmoment der Ausgangswelle ist;
ω die Drehzahl des Motors (20) ist;
J ein Trägheitsmoment ist; und
θ ein Anziehwinkel beim Befestigen eines Objekts mit dem Einstelldrehmoment ist,
und bei dem die Steuerparametereinstelleinheit (50) zum Bestimmen der Drehzahl ω als die optimale maximale Drehzahl angepasst ist und zum Einstellen der optimalen maximalen Drehzahl als den Steuerparameter angepasst ist.

4. Elektrisches Kraftwerkzeug nach einem der Ansprüche 1-3, bei dem das elektrische Kraftwerkzeug aufweist:

eine Drehmomenteinstelleinheit (36), die zum Auswählen, ansprechend auf eine externe Betätigung, des Einstelldrehmoments aus mehreren verfügbaren vorbestimmten Drehmomenten angepasst ist,

bei dem die Steuerparametereinstelleinheit (50) zum Einstellen einer optimalen maximalen Drehzahl, die mindestens einem der mehreren verfügbaren vorbestimmten Drehmomente, die durch die Drehmomenteinstelleinheit (36) auswählbar sind, entspricht, oder einer Steuergröße, die der optimalen maximalen Drehzahl entspricht, als den Steuerparameter angepasst ist.

5. Elektrisches Kraftwerkzeug nach einem der Ansprüche 1-4, ferner mit:

einer Motorstromdetektionseinheit (26), die zum Detektieren eines zu dem Motor (20) fließenden Motorstroms angepasst ist; und
einer Stromschwelleneinstelleinheit (50), die zum Einstellen einer Stromschwelle, die eine Obergrenze des Motorstroms ist, ansprechend auf das Einstelldrehmoment angepasst ist,
bei dem die Steuereinheit (50) zum Stoppen eines Antriebs des Motors (20), wenn der von der Motorstromdetektionseinheit (26) detektierte Motorstrom die von der Stromschwelleneinstelleinheit (50) eingestellte Stromschwelle zum Zeitpunkt eines Antriebs des Motors (20) erreicht, angepasst ist.

6. Elektrisches Kraftwerkzeug nach einem der Ansprüche 1-5, bei dem die Steuerparametereinstelleinheit (50) zum Bestimmen einer Drehzahl des Motors (20), der mit einer Drehenergie dreht, die zum Drehen der Ausgangswelle mit dem Einstelldrehmoment bei einer Drehzahl benötigt wird, die dazu ausreicht, zu verhindern, dass das Drehmoment das vorbestimmte Einstelldrehmoment überschreitet, wenn eine Unterbrechungsbedingung erfüllt ist, als die optimale maximale Drehzahl angepasst ist und zum Einstellen der optimalen maximalen Drehzahl als den Steuerparameter angepasst ist.

**Revendications**

1. Outil électrique comprenant :

un moteur (20) configuré pour entraîner en rotation un arbre de sortie sur lequel un outil peut être monté de manière amovible ;
une unité d'exploitation (30) configurée pour être exploitée de manière externe de façon à entrer un ordre d'entraînement qui est utilisé pour exploiter le moteur (20) ;
une unité de réglage de paramètre de commande (50) qui est adaptée pour régler, en tant que paramètre de commande du moteur (20), une vitesse de rotation maximale optimale du moteur (20) correspondant à un couple réglé prédéterminé ou une quantité de commande correspondant à la vitesse de rotation maximale optimale ; et
une unité de commande (50) configurée pour entraîner le moteur (20) en réponse à une quantité d'exploitation de l'unité d'exploitation (30), et pour commander une vitesse de rotation du moteur (20) à la vitesse de rotation maximale optimale ou moins d'après le paramètre de commande réglé par l'unité de réglage de paramètre de commande (50),
dans lequel l'unité de réglage de paramètre de commande (50) est adaptée pour déterminer, en tant que vitesse de rotation maximale optimale, une vitesse de rotation du moteur (20) qui entre en rotation avec une énergie de rotation requise pour mettre l'arbre de sortie en rotation au couple réglé, et est adaptée pour régler la vitesse de rotation maximale optimale en tant que paramètre de commande.

2. Outil électrique selon la revendication 1, dans lequel l'unité de réglage de paramètre de commande (50) est adaptée pour calculer une vitesse de rotation $\omega$ du moteur (20) de façon à satisfaire la formule (1) ci-dessous :

$$T \geq \alpha \cdot \omega^2 \qquad (1)$$

dans lequel :

T est le couple réglé de l'arbre de sortie ;
$\omega$ est la vitesse de rotation du moteur (20) ; et
$\alpha$ est un coefficient,
et dans lequel l'unité de réglage de paramètre de commande (50) est adaptée pour déterminer la vitesse de rotation $\omega$ en tant que vitesse de rotation maximale optimale et est adaptée pour régler la vitesse de rotation maximale optimale en tant que paramètre de commande.

3. Outil électrique selon la revendication 1, dans lequel l'unité de réglage de paramètre de commande (50) est adaptée pour calculer une vitesse de rotation $\omega$ du moteur (20) de façon à satisfaire la formule (2) ci-dessous :

$$T \geq (J/\theta) \cdot \omega^2 \qquad (2)$$

dans lequel :

T est le couple réglé de l'arbre de sortie ;

ω est la vitesse de rotation du moteur (20) ; et J est un moment d'inertie, et

θ est un angle de serrage lors de la fixation d'un objet au couple réglé,

et dans lequel l'unité de réglage de paramètre de commande (50) est adaptée pour déterminer la vitesse de rotation ω en tant que vitesse de rotation maximale optimale, est adaptée pour régler la vitesse de rotation maximale optimale en tant que paramètre de commande.

4. Outil électrique selon l'une quelconque des revendications 1 à 3, dans lequel l'outil électrique comprend :

une unité de réglage de couple (36) qui est adaptée pour sélectionner, en réponse à une exploitation externe, le couple réglé parmi une pluralité de couples prédéterminés disponibles, dans lequel l'unité de réglage de paramètre de commande (50) est adaptée pour régler, en tant que paramètre de commande, une vitesse de rotation maximale optimale correspondant à au moins l'un de la pluralité de couples prédéterminés disponibles sélectionnables par l'unité de réglage de couple (36) ou une quantité de commande correspondant à la vitesse de rotation maximale optimale.

5. Outil électrique selon l'une quelconque des revendications 1 à 4, comprenant en outre :

une unité de détection de courant de moteur (26) qui est adaptée pour détecter un courant de moteur circulant vers le moteur (20) ; et une unité de réglage de seuil de courant (50) qui est adaptée pour régler, en réponse au couple réglé, un seuil de courant qui est une limite supérieure du courant de moteur, dans lequel l'unité de commande (50) est adaptée pour arrêter l'entraînement du moteur (20) lorsque le courant de moteur détecté par l'unité de détection de courant de moteur (26) atteint le seuil de courant réglé par l'unité de réglage de seuil de courant (50) à un moment d'entraînement du moteur (20).

6. Outil électrique selon l'une quelconque des revendications 1 à 5, dans lequel l'unité de réglage de paramètre de commande (50) est adaptée pour déterminer, en tant que vitesse de rotation maximale optimale, une vitesse de rotation du moteur (20) qui entre en rotation avec une énergie de rotation requise pour mettre l'arbre de sortie en rotation au couple réglé à une vitesse suffisante pour empêcher le couple de rotation de dépasser le couple réglé prédéterminé lorsqu'une condition d'interruption est satisfaite, et est adaptée pour régler la vitesse de rotation maximale optimale en tant que paramètre de commande.

FIG. 1

Figure showing motor drive system: Motor M (20), 22, 24 (MOTOR DRIVE CIRCUIT) with transistors Q1, Q2, Q3, Q4, Q5, Q6, connected to motor phases U, V, W, resistor 26, GATE CIRCUIT (28), CONTROLLER (MICROCOMPUTER) (50) containing CPU (51), ROM (54), RAM (53). Inputs from TRIGGER SWITCH (30): MAIN CONTACT (31), SLIDING RESISTOR (32), FORWARD REVERSE CONTACT (33); TORQUE SETTING SWITCH (36), TORQUE SETTING INDICATOR (38), ACTUAL SCREW SETTING UNIT (40), ACTUAL SCREW INDICATOR (42). REGULATOR (52), Vcc, battery (10).

FIG. 2

```
                    ┌─────────────────────┐
                    │        START        │
                    └─────────────────────┘
                              │
        ┌─────────────────────┼──────────────── S110
        │         ┌───────────────────────────┐
        │         │      SWITCH PROCESS        │
        │         └───────────────────────────┘
        │                     │                 S120
        │         ┌───────────────────────────┐
        │         │    A/D CONVERSION PROCESS  │
        │         └───────────────────────────┘
        │                     │                 S130
        │         ┌───────────────────────────┐
        │         │   TORQUE SETTING PROCESS   │
        │         └───────────────────────────┘
        │                     │                 S140
        │         ┌───────────────────────────┐
        │         │TORQUE SETTING INDICATING PROCESS│
        │         └───────────────────────────┘
        │                     │                 S150
        │         ┌───────────────────────────┐
        │         │   MOTOR ROTATIONAL SPEED   │
        │         │      SETTING PROCESS       │
        │         └───────────────────────────┘
        │                     │                 S160
        │         ┌───────────────────────────┐
        │         │ ELECTRONIC CLUTCH OPERATION│
        │         │    DETERMINING PROCESS     │
        │         └───────────────────────────┘
        │                     │                 S170
        │         ┌───────────────────────────┐
        │         │    MOTOR DRIVE PROCESS     │
        │         └───────────────────────────┘
        │                     │
        └─────────────────────┘
```

FIG. 3

MOTOR ROTATIONAL SPEED
SETTING PROCESS

S210

SET SOFT JOINT?    NO

YES

S230

SET HARD JOINT?    NO

YES

S220
OBTAIN
OPTIMUM MAXIMUM
ROTATIONAL SPEED
OF SOFT JOINT

S240
OBTAIN
OPTIMUM MAXIMUM
ROTATIONAL SPEED
OF HARD JOINT

S250
OBTAIN
OPTIMUM MAXIMUM
ROTATIONAL SPEED
OF THE OTHERS

RETURN

FIG. 4

ROTATIONAL SPEED SETTING MAP

| TIGHTENING TORQUE [N·m] | HARD JOINT | SOFT JOINT | THE OTHERS |
|---|---|---|---|
| | ROTATIONAL SPEED [min⁻¹] | ROTATIONAL SPEED [min⁻¹] | ROTATIONAL SPEED [min⁻¹] |
| 0.5 | 1103 | 5405 | 2702 |
| 1.0 | 1560 | 7644 | 3822 |
| 1.5 | 1911 | 9361 | 4681 |
| ⁓ | ⁓ | ⁓ | ⁓ |
| 9.5 | 4809 | 20933 | 11780 |
| 10.0 | 4934 | 20933 | 12086 |

## FIG. 5A

HARD JOINT    CALCULATION CONDITIONS→GEAR RATIO8.24 , INERTIA MOMENT: 0.000002[kg·m$^2$] ,
TIGHTENING ANGLE: 30° (0.52359885[rad])

| OUTPUT SHAFT | | MOTOR SHAFT | | | | OUTPUT SHAFT |
|---|---|---|---|---|---|---|
| TIGHTENING TORQUE [N·m] | TIGHTENING TORQUE [kgf·m] | ROTATIONAL TORQUE [kgf·m] | JOINT COEFFICIENT K | ROTATIONAL SPEED [rad/s] | ROTATIONAL SPEED [min$^{-1}$] | ROTATIONAL SPEED [min$^{-1}$] |
| 0.5 | 0.05 | 0.006 | 0.001 | 116 | 1103 | 134 |
| 1.0 | 0.10 | 0.012 | 0.003 | 163 | 1560 | 189 |
| 1.5 | 0.15 | 0.019 | 0.004 | 200 | 1911 | 232 |
| ⋮ | ⋮ | ⋮ | ⋮ | ⋮ | ⋮ | ⋮ |
| 9.5 | 0.97 | 0.118 | 0.027 | 504 | 4809 | 584 |
| 10.0 | 1.02 | 0.124 | 0.029 | 517 | 4934 | 599 |

EP 2 572 831 B1

## FIG. 5B

CALCULATION CONDITIONS→GEAR RATIO : 8.24 ,   INERTIA MOMENT : 0.000002[kg·m²]

SOFT JOINT    ,

TIGHTENING ANGLE : 720°   (12.5663724[rad])

| OUTPUT SHAFT | | MOTOR SHAFT | | | | OUTPUT SHAFT |
|---|---|---|---|---|---|---|
| TIGHTENING TORQUE [N·m] | TIGHTENING TORQUE [kgf·m] | ROTATIONAL TORQUE [kgf·m] | JOINT COEFFICIENT K | ROTATIONAL SPEED [rad/s] | ROTATIONAL SPEED [min⁻¹] | ROTATIONAL SPEED [min⁻¹] |
| 0.5 | 0.05 | 0.006 | 0.00006 | 566 | 5405 | 656 |
| 1.0 | 0.10 | 0.012 | 0.00012 | 800 | 7644 | 928 |
| 1.5 | 0.15 | 0.019 | 0.00018 | 980 | 9361 | 1136 |
| ⁞ | ⁞ | ⁞ | ⁞ | ⁞ | ⁞ | ⁞ |
| 9.5 | 0.97 | 0.118 | 0.00114 | 2467 | 23559 | 2859 |
| 10.0 | 1.02 | 0.124 | 0.00120 | 2531 | 24171 | 2933 |

FIG. 6

DUTY SETTING MAP

| TIGHTENING TORQUE [N·m] | HARD JOINT | SOFT JOINT | THE OTHERS |
|---|---|---|---|
| | DUTY | DUTY | DUTY |
| 0.5 | 13 | 37 | 18 |
| 1.0 | 14 | 43 | 24 |
| 1.5 | 15 | 46 | 30 |
| ⁝ | ⁝ | ⁝ | ⁝ |
| 9.5 | 31 | 100 | 53 |
| 10.0 | 32 | 100 | 54 |

FIG. 7

ROTATIONAL SPEED SETTING MAP

| TIGHTENING TORQUE [N·m] | TIGHTENING ANGLE | | | | | | |
|---|---|---|---|---|---|---|---|
| | 30° | 60° | 90° | · · · · · | 660° | 690° | 720° |
| 0.5 | 1103 | 1560 | 1911 | · · · · · | 5175 | 5291 | 5405 |
| 1.0 | 1560 | 2207 | 2702 | · · · · · | 7318 | 7483 | 7644 |
| 1.5 | 1911 | 2702 | 3310 | · · · · · | 8963 | 9164 | 9361 |
| | | | | · · · · · | | | |
| 9.5 | 4809 | 6801 | 8329 | · · · · · | 22556 | 23063 | 23559 |
| 10.0 | 4934 | 6978 | 8546 | · · · · · | 23142 | 23662 | 24171 |

FIG. 8

```
      ┌─────────────────────────────┐
      │   MOTOR ROTATIONAL SPEED    │
      │      SETTING PROCESS        │
      └─────────────────────────────┘
                    │
                    │              S310
      ┌─────────────────────────────┐
      │   OBTAIN OPTIMUM MAXIMUM     │
      │     ROTATIONAL SPEED        │
      └─────────────────────────────┘
                    │
                    │         S320
              ╱─────────────╲
             ╱   EQUAL TO    ╲         NO
      ◄─────  OR LESS THAN MAXIMUM ─────────┐
             ╲ ROTATIONAL SPEED? ╱          │
              ╲─────────────╱               │            S330
                    │  YES          ┌──────────────────────────────────┐
                    │               │  SET MAXIMUM ROTATIONAL SPEED     │
                    │               │ AS OPTIMUM MAXIMUM ROTATIONAL SPEED│
                    │               └──────────────────────────────────┘
                    │◄──────────────────────────┘
                    │
            ┌───────────────┐
            │    RETURN     │
            └───────────────┘
```

## REFERENCES CITED IN THE DESCRIPTION

**Patent documents cited in the description**

- JP 10193230 A
- WO 2008128523 A2
- DE 102006046388 A1
- US 5245747 A
- EP 1510294 A1